# EUROPÄISCHE PATENTSCHRIFT

(11) **EP 0 713 282 B1**
(45) Veröffentlichungstag und Bekanntmachung des Hinweises auf die Patenterteilung: **26.08.1998**
(21) Anmeldenummer: 95115218.0
(22) Anmeldetag: 27.09.1995
(51) Int. Cl.: H02K 5/128, H02K 1/16, H02K 11/04

(54) **Spaltrohrmotor**
Canned motor
Moteur à manchon d'entrefer

(30) Priorität: 27.10.1994 DE 4438130
(43) Veröffentlichungstag der Anmeldung: 22.05.1996
(73) Patentinhaber: WILO GmbH, D-44263 Dortmund (DE)
(72) Erfinder: Hanitsch, Rolf, Prof., Dr., D-14197 Berlin (DE); Kech, Hansjürgen, Dipl.-Ing., D-58313 Herdecke (DE)
(74) Vertreter: COHAUSZ HANNIG DAWIDOWICZ & PARTNER

(56) Entgegenhaltungen:
- DE-C- 967 387
- DE-C- 3 931 665
- DE-U- 9 320 524
- GB-A- 1 414 949
- US-A- 5 099 182
- PATENT ABSTRACTS OF JAPAN Bd. 016, Nr. 018 (E-1155) 17 Januar 1992 & JP-A-03 235 629 (MITSUBISHI ELECTRIC CORP) 21 Oktober 1991

## Beschreibung

Die Erfindung betrifft einen Spaltrohrmotor für Pumpen, mit einem zwischen dem Rotor und dem Ständer angeordneten Spalttopf, welcher die fördermediumsführende Seite von der elektrischen Antriebsseite trennt, wobei eine Ständerwicklung von einem Ständerblechpaket getragen ist, wobei der Stator einen dünnwandigen hülsenförmigen, insbesondere geblechten Grundkörper aufweist, auf dem gleichmäßig um den Umfang verteilt angeordnete, sich über mindestens einen Teil der axialen Länge des Grundkörpers erstreckende, radial nach außen hin stehende Stege angeordnet sind, die zwischen sich Nuten bilden, in denen die Ständerwicklungen einliegen.

Spaltrohrpumpen werden fast ausschließlich mit Asynchronmotoren in Dreh- und Wechselstrom betrieben. Diese Motoren haben heute eine hohe Fertigungsreife und eine hohe Zuverlässigkeit. Das Spaltrohr trennt dabei die fördermediumsführende Seite von der elektrischen Antriebsseite. Der Rotor ist meist vom Fördermedium vollständig umgeben. Die Ständerwicklung befindet sich außerhalb des Spaltrohres bzw. Spalttopfes und wird von einem Ständerblechpaket getragen.

Aus der deutschen Patentschrift 97 12 40 ist ein elektrischer Induktionsmotor mit gegen Eindringen von Flüssigkeit durch ein dünnes Spaltrohr abgedichtetem Stator bekannt. Auf das Spaltrohr sind untereinander isolierte Lamellen aufgeschoben, wobei jede Lamelle aus einem dünnen Innensteg besteht, an den in gleichmäßigen Abständen zueinander radial nach außen abstehende Zähne angeformt sind. Die Zähne bilden nach außen offene Nuten, in denen die Wicklungen des Ständers einliegen. Nach dem Einlegen der Ständerwicklungen in die Wicklungsnuten wird ein hülsenförmiger Kern über die Lamellen geschoben, wobei der hülsenförmige Kern die Nuten in radialer Richtung verschließt. Durch einen derartigen Aufbau läßt sich der Luftspalt zwischen Stator und Rotor erheblich verringern. Hierdurch wird der Wirkungsgrad und der Füllfaktor verbessert und ein besseres Körperschallverhalten erzielt. Da die Nuten radial nach außen hin geöffnet sind, wird der technische Aufwand zum Aufwickeln der Ständerwicklung erheblich reduziert.

Der Materialübergang von den Stegenden zum Verschließteil bildet einen zusätzlichen Luftspalt von wenigen Mikrometern, der als Fügespalt bezeichnet wird. Dieser Fügespalt ist im Vergleich zum Stator/Rotor-Luftspalt vernachlässigbar klein und wirkt sich nicht negativ auf den Wirkungsgrad des Spaltrohrmotors aus, da die magnetischen Spannungen am Joch wesentlich kleiner sind als die magnetischen Spannungen am Luftspalt und in den übrigen Eisenabschnitten von Stator und Rotor. Durch das Verschließteil sind die in den Nuten eingelegten Ständerwicklungen sicher gehalten.

Will man den Spalt zwischen Stator und Rotor weiter reduzieren, muß die Wanddicke des Spalttopfes sowie des Innensteges verkleinert werden. Bedingt durch die konstruktive Gestaltung kommt es jedoch bei einer Verkleinerung der Wandstärken zu Instabilitäten des Spalttopfes.

Aufgabe der Erfindung ist es daher, die Konstruktion derartiger Spaltrohrmotoren so zu verändern, daß auch bei kleinen Wandstärken des Spalttopfes eine genügend hohe Stabilität der Konstruktion gewährleistet ist.

Diese Aufgabe wird erfindungsgemäß durch die kennzeichnenden Merkmale des Anspruchs 1 gelöst.

Ebenfalls vorteilsmäßig ist es, wenn das topfförmige Verschließteil aus einem insbesondere weichmagnetischen gesinterten Material ist. Hierdurch wird ebenfalls der magnetische Rückschluß verbessert. Durch die Verwendung von gesinterten Material für das Verschließteil, wird der fertigungstechnische Aufwand im Gegensatz zu geblechten Verschließteilen erheblich verringert, wodurch sich Kostenvorteil ergeben.

Es ist ferner von Vorteil, wenn der hülsförmige Grundkörper mit seiner zylindrischen Innenseite mindestens teilweise an der Außenseite des Spaltrohres bzw. Spalttopfes anliegt. Hierdurch wird der Luftspalt zwischen Stator und Rotor minimiert. Durch das Anliegen wird eine bessere Wärmeübertragung vom Stator hin zum Fördermedium gewährleistet.

Vorteilsmäßig ist es, wenn die Motorelektronik am Verschließteil oder neben dem Stator angeordnet ist bzw. an diesen anschließt, insbesondere an der dem Pumpenrad abgewandten Seite des Stators, wobei das Ständerblechpaket als Kühlkörper und elektronische Abschirmung für die Elektronik dient. Dadurch, daß das Ständerblechpaket bestehend aus dem hülsenförmigen Grundkörper mit den daran angeformten Stegen und den Verschließteil direkt am Spalttopf bzw. Spaltrohr anliegt, wird die von der Elektronik erzeugte Wärme gut über das Ständerblechpaket und dem Spalttopf zum Fördermedium abgeleitet. Hierdurch sind keine zusätzlichen Kühleinrichtungen für die Motorelektronik erforderlich.

Der Wärmeübertragungswiderstand wird zusätzlich dadurch erniedrigt, daß zumindest ein Teil der elektrischen Wicklungen und/oder Verbindungsleitungen der Ständerwicklung direkt zwischen dem Spalttopfboden und der Motorelektronik einliegen.

Das topfförmige Verschließteil liegt vorteilsmäßig mit seiner Topfbodeninnenseite zumindest teilweise an dem Spalttopfboden und/oder an dem am Spalttopfboden anliegenden elektrischen Wicklungen und/oder Verbindungsleitungen der Ständerwicklungen an. Hierdurch wird ebenfalls der Wärmeübertragungswiderstand zwischen Stator und Fördermedium vorteilsmäßig verringert. Auch wird durch das Anliegen der Ständerwicklungen und/oder des topfförmigen Verschließteils am Spalttopf die Stabilität der Konstruktion weiter erhöht.

Als Spaltrohrmotor wird vorzugsmäßig ein Asynchronmotor oder elektrisch kommutierter Motor verwendet. Die Ständerwicklung kann zylindrisch oder halbkugelförmig insbesondere topfförmig sein. Bei der Verwendung eines elektronisch kommutierten Motors sind vorzugsmäßig an der dem Spaltrohr oder Spalttopf zugewandten Seite des Rotors gleichmäßig um die Rotorachse angeordnet Permanentmagnete befestigt. Die Verwendung findenden Permanentmagnete sind dabei vorzugsmäßig segmentförmig. Zur Befestigung der Permanentmagnete hat der Rotor erfindungsgemäß ein Trägerelement, das form- oder kraftschlüssig am Rotor befestigt ist, wobei das Trägerelement die Permanentmagnete trägt. Bevorzugt hält das Trägerelement mit seiner äußeren Mantelfläche form- oder kraftschlüssig ein Blechpaket, wobei die Permanentmagnete in oder an der dem Kunststoffteil abgewandten Seite des Blechpaketes einliegen bzw. befestigt sind. Die Längsausdehnung der segmentförmigen Permanentmagnete erstreckt sich dabei parallel zur Rotorachse. Hierdurch wird eine besonders günstige Kraftübertragung zwischen dem rotierenden Magnetfeld der Ständerwicklung und den Permanentmagneten erzielt.

Auch ist es von Vorteil, wenn das Spaltrohr oder der Spalttopf aus einem weichmagnetischen Werkstoff oder Kunststoff ist, wodurch der magnetische Widerstand zwischen Rotor und Stator verringert wird. Die Motorelektronik ist vorteilsmäßig als Modul ausgebildet und kann einen Teil des Motorgehäuses bilden.

Nachfolgend wird anhand der Figuren die Erfindung näher erläutert.

Es zeigen:
- Fig. 1:: Einen Spaltrohrmotor mit zylindrischer Wicklung;
- Fig. 2:: Einen Spaltrohrmotor mit Kugel- bzw. Halbkugelwicklung;
- Fig. 3:: Einen elektronisch kommutierten Spaltrohrmotor mit zugehöriger Elektronik und

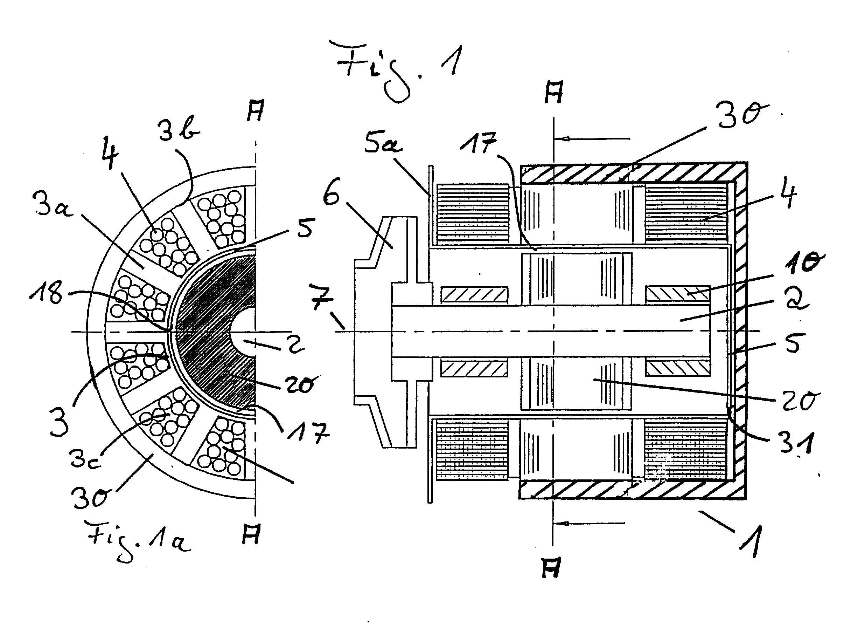

Fig. 1 zeigt einen Asynchronmotor 1, der eine zylindrische Ständerwicklung 4 hat, die außen am Spalttopf 5 aufgebracht bzw. auf diesen aufgeschoben ist. Innerhalb des Spalttopfes 5 befindet sich der von den Lagern 10 gehaltene Rotor 2, auf dem zwischen den Lagern 10 die Rotorwicklung 20 (Käfigläufer) angeordnet ist. An dem der Spalttopföffnung zugewandten Ende der Rotorachse 2 befindet sich ein Pumpenlaufrad 6 zum Fördern eines Fördermediums, welches den Rotor 2 und die Rotorwicklung 20 umströmt. Zwischen der Rotorwicklung 20 und dem Spalttopf 5 befindet sich der Luftspalt 17.

Fig. 1 zeigt einen Querschnitt des Asynchronmotors 1 im Bereich der Rotorwicklung 20. Die Ständerwicklung 4 liegt in den vom dünnwandigen hülsenförmigen Grundkörper 3 und den daran in gleichmäßigen Abständen voneiander angeformten Stegen 3a gebildeten Nuten 3c ein. Der Grundkörper 3 ist dabei insbesondere ein Stapel aus gestanzten Blechen. Die Nuten 3c erstrecken sich dabei in axialer Längsrichtung des Rotors 2. Der hülsenförmige Grundkörper 3 liegt mit seiner Innenfläche am Außenmantel des Spalttopfes 5 an. Mittels eines Paßsitzes wird der Übergangsbereich 18 zwischen hülsenförmigem Grundkörper 3 und dem Spalttopf 5 minimiert, wodurch sich ein niedriger Wärmeleitwiderstand ergibt. Die Nuten 3c sind mittels eines Verschließteils 30, welches topfförmig ist, verschlossen. Dabei liegen die Stirnflächen 3b der Stege 3a paßgenau an der Innenfläche des Verschließteils 30 an und bilden mit diesem einen Fügespalt von wenigen Mikrometern. Das topfförmige Verschließteil 30 liegt mit seiner Topfbodeninnenseite 31 am Spalttopf 5 an und stützt diesen.

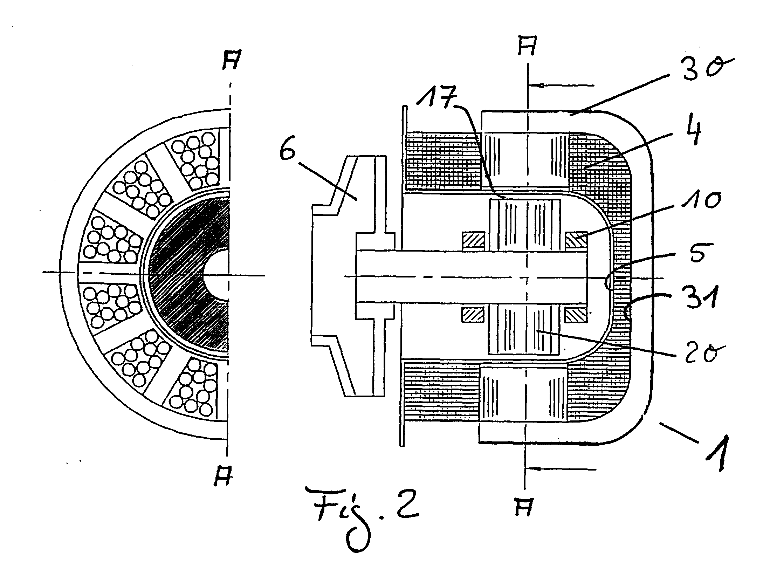

Figur 2 zeigt ebenfalls einen Asynchronmotor 1, der als Spaltrohrmotor ausgebildet ist, wobei die Ständerwicklung 4 halbkugelförmig ausgebildet ist und den Topfboden des Spalttopfes 5 umfaßt bzw. an diesem anliegt. Das topfförmige Verschließteil 30 liegt dabei formschlüssig an der Ständerwicklung 4 an.

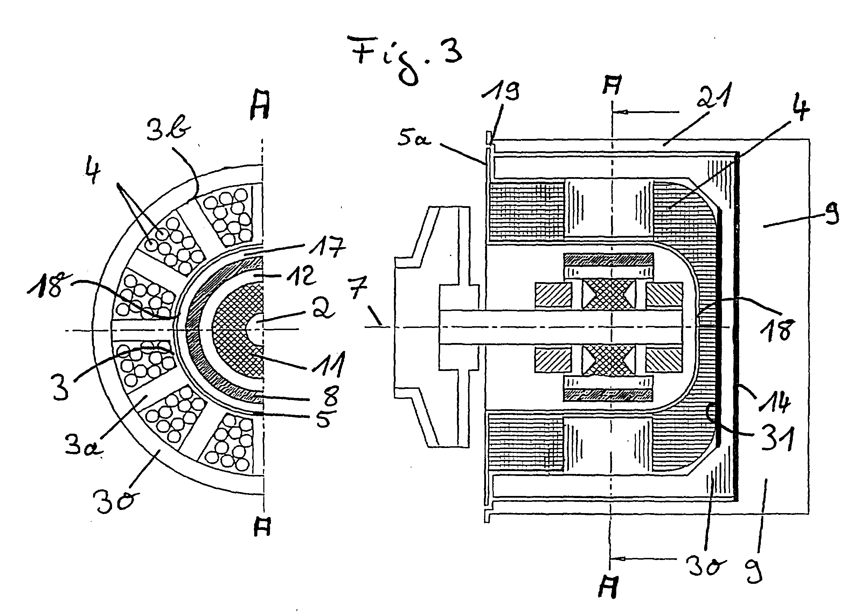

Figur 3 zeigt einen elektronisch kommutierten Motor 1 in Spaltrohrbauweise, dessen Stator im wesentlichen dem Stator des Asynchronmotors aus Figur 2 entspricht. Die Steuer- und Regelelektronik 9 ist als Modul ausgebildet und liegt wie in Figur 3 dargestellt und liegt mit seiner einen Gehäuseseite formschlüssig an der Ständerwicklung 4 an. Das topfförmige Verschlußteil 30 liegt mit seiner Topfbodeninnenseite 31 an der Ständerwicklung 4 an, wodurch die von der Elektronik erzeugte Wärmeenergie über das Verschlußteil 30 und die Ständerwicklung 4 bzw. das Ständerblechpaket 3 und dem sich daran anschließenden Spalttopf 5 auf das Fördermedium abgeleitet wird.

Die Elektronik 9 ist dabei in das Motorgehäuse 21 integriert. Ein Dichtring 19, der zwischen dem Motorgehäuse 21 und dem Kragen 5a des Spalttopfes 5 einliegt, verschließt die elektrische Antriebsseite und schützt die Ständerwicklung 4 und Ständerblechpaket 3 vor Verschmutzung.

Der Rotor des in Figur 3 dargestellten elektronisch kommutierten Motors 1 ist mittels zweier am Spalttopf befestigter Lager 10 gehalten. Zwischen den Lagern 10 ist ein hülsenförmiges Kunststoffträgerelement 11 auf den Rotor 2 aufgeschoben, welches die segmentförmigen Permanentmagnete 8 direkt oder mittels eines Blechpakets 12 hält. Die Permanentmagnete liegen in sich axial erstreckenden Nuten ein und sind mittels geeigneter Befestigungsmittel in radialer Richtung gehalten.

### Bezugszeichenliste

- 1): Spaltmotor
- 2): Rotor
- 3): hülenförmiger Grundkörper des Ständerblechpaketes
- 3a): Stege
- 3b): Stirnflächen der Stege
- 3c): Nuten
- 4): Ständerwicklungen
- 5): Spaltrohr bzw. Spalttopf
- .5a): Kragen des Spaltrohres bzw. Spalttopfes
- 6): (Pumpen) Laufrad
- 7): Rotorachse
- 8): Permanentmagnete
- 9): Motorelektronik (Modul)
- 10): Lager
- 11): Trägerelement/ hülsenförmiges Kunststoffteil
- 12): Blechpaket
- 14): Anlagefläche zwischen Rotorelektronik und Ständerblechpaket
- 17): Luftspalt
- 18): Anlagefläche zwischen Innseite des hülsenförmigen Grundkörpers des Ständerblechpaketes mit dem Spaltrohr bzw. Spalttopf
- 19): Dichting
- 20): Rotorwocklung
- 30): hülsen- bzw. topfförmiges Verschließteil

## Patentansprüche

1. Spaltrohrmotor (1) für Pumpen, mit einem zwischen dem Rotor (2) und dem Ständer angeordneten Spalttopf (5), welcher die fördermediumsführende Seite von der elektrischen Antriebsseite trennt, wobei eine Ständerwicklung (4) von einem Ständerblechpaket getragen ist, wobei der Stator einen dünnwandigen hülsenförmigen, insbesondere geblechten Grundkörper (3) aufweist, auf dem gleichmäßig um den Umfang verteilt angeordnete, sich über mindestens einen Teil der axialen Länge des Grundkörpers erstreckende, radial nach außen hin stehende Stege (3a) angeordnet sind, die zwischen sich Nuten (3c) bilden, in denen die Ständerwicklungen (4) einliegen, **dadurch gekennzeichnet**, daß der hülsenförmige Grundkörper (3) mit seiner zylindrischen Innenseite (18) mindestens teilweise an der Außenseite des Spalttopfes (5) anliegt und auf dem Grundkörper (3) mit seinen Stegen (3a) ein topfförmiges Verschließteil (30) aufschiebbar ist, welches die Nuten (3c) in radialer Richtung verschließt, und das topfförmige Verschließteil (30) mit seiner Topfbodeninnenseite (31) zumindest teilweise an dem Spalttopfboden (5) anliegt.

2. Spaltrohrmotor nach Anspruch 1, **dadurch gekennzeichnet**, daß das topfförmige Verschlußteil (30) aus einem insbesondere weichmagnetischen gesinterten Material ist.

3. Spaltrohrmotor nach einem der vorherigen Ansprüche, **dadurch gekennzeichnet**, daß am Verschließteil (30) die Motorelektronik ist.

4. Spaltrohrmotor nach einem der vorherigen Ansprüche, **dadurch gekennzeichnet**, daß die Motorelektronik (9) neben dem Stator angeordnet ist bzw. an diesen anschließt, insbesondere an der dem Pumpenlaufrad abgewandten Seite des Stators, wobei das Ständerblechpaket (3, 3a, 30) als Kühlkörper und elektronische Abschirmung für die Elektronik (9) dient.

5. Spaltrohrmotor nach einem der vorherigen Ansprüche, **dadurch gekennzeichnet**, daß die Nuten sich über die axiale Länge des Ständerblechpaketes (3, 30) erstrecken.

6. Spaltrohrmotor nach einem der vorherigen Ansprüche, **dadurch gekennzeichnet**, daß die elektrischen Wicklungen und/oder Verbindungsleitungen der Ständerwicklungen (4) am Spalttopfboden (5) anliegen.

7. Spaltrohrmotor nach einem der vorherigen Ansprüche, **dadurch gekennzeichnet**, daß das topfförmige Verschließteil (30) mit seiner Topfbodeninnenseite (31) zumindest teilweise an den am Spalttopfboden (5) anliegenden elektrischen Wicklungen und/oder Verbindungsleitungen der Ständerwicklungen (4) anliegt.

8. Spaltrohrmotor nach einem der vorherigen Ansprüche, **dadurch gekennzeichnet**, daß der Spaltrohrmotor (1) ein Asynchronmotor oder elektrisch kommutierter Motor ist.

9. Spaltrohrmotor nach einem der vorherigen Ansprüche, **dadurch gekennzeichnet**, daß die Ständerwicklung (4) zylindrisch oder halbkugelförmig insbesondere topfförmig ist.

10. Spaltrohrmotor nach einem der vorherigen Ansprüche, **dadurch gekennzeichnet**, daß an der dem Spalttopf (5) zugewandten Seite des Rotors (2) gleichmäßig um die Rotorachse angeordnete Permanentmagnete (8) befestigt sind.

11. Spaltrohrmotor nach einem der vorherigen Ansprüche, **dadurch gekennzeichnet**, daß die Permanentmagnete (8) segmentförmig sind.

12. Spaltrohrmotor nach einem der vorherigen Ansprüche, **dadurch gekennzeichnet**, daß der Rotor (2) ein Trägerelement (11) form- oder kraftschlüssig hält, wobei das Trägerelement (11) die Permanentmagnete (8) trägt.

13. Spaltrohrmotor nach einem der vorherigen Ansprüche, **dadurch gekennzeichnet**, daß das Trägerelement (11) ein auf dem Rotor (2) aufgeschobenes hülsenförmiges Kunststoffteil ist, welches mit seiner äußeren Mantelfläche form- oder kraftschlüssig ein Blechpaket (12) hält, wobei die Permanentmagnete (8) in oder an der dem Kunststoffteil (11) abgewandten Seite des Blechpaketes (12) einliegen bzw. befestigt sind.

14. Spaltrohrmotor nach einem der vorherigen Ansprüche, **dadurch gekennzeichnet**, daß der Spalttopf (5) aus einem weichmagnetischen Werkstoff oder Kunststoff ist.

15. Spaltrohrmotor nach einem der vorherigen Ansprüche, **dadurch gekennzeichnet**, daß die Motorelektronik (9) als Modul, insbesondere als aufsteckbares Modul ausgebildet ist.

16. Spaltrohrmotor nach einem der vorherigen Ansprüche, **dadurch gekennzeichnet**, daß die Motorelektronik (9) einen Teil des Motorgehäuses bildet.

17. Spaltrohrmotor nach einem der vorherigen Ansprüche, **dadurch gekennzeichnet**, daß das Motorelektronikmodul (9) eine Buchse und/oder einen Stecker hat, und daß der Spalttopf (5) bzw. die Ständerwicklung (4) einen Stecker und/oder eine Buchse hat, wobei Buchse und Stecker beim Montieren des Moduls (9) ineinandergreifen und den elektrischen Kontakt bilden.

## Claims

1. A canned motor (1) for pumps, having a can (5) which is disposed between the rotor (2) and the stator and which separates the pumping medium carrying side from the electric driving side, a stator winding (4) being borne by a stator bundle of laminations, while the stator has a thin-walled, sleeve-shaped, more particularly laminated base member (3) on which radially outward projecting webs (3a) are disposed which are arranged uniformly distributed around the periphery and which extend over at least a portion of the axial length of the base member and form between themselves grooves (3c) in which the stator windings (4) are received,
**characterised in that** the sleeve-shaped base member (3) bears via its cylindrical inner side (18) at least partially against the outside of the can (5) and a pot-shaped closure member (30) can be slid by its webs (3a) on to the base member (3) to close the grooves (3c) in the radial direction, the pot-shaped closure member (30) bearing via its pot bottom inner side (31) at least partially against the can end (5).

2. A canned motor according to claim 1,
**characterised in that** the pot-shaped closure member (30) is made from a more particularly soft magnetic sintered material.

3. A canned motor according to one of the preceding claims,
**characterised in that** the motor electronics are on the closure member (30).

4. A canned motor according to one of the preceding claims,
**characterised in that** the motor electronics (9) are disposed alongside or on the stator, more particularly on the stator side remote from the pump impeller, the bundle of stator laminations (3, 3a, 30) acting as a cooling member and an electronic screen for the electronics (9).

5. A canned motor according to one of the preceding claims,
**characterised in that** the grooves extend over the axial length of the bundle of stator laminations (3, 30).

6. A canned motor according to one of the preceding claims,
**characterised in that** the electric windings and/or connected wires of the stator windings (4) bear against the can end (5).

7. A canned motor according to one of the preceding claims,
**characterised in that** the pot-shaped closure member (30) bears via its pot bottom side (31) at least partially against the electric windings bearing against the can end (5) and/or connecting wires of the stator windings (4).

8. A canned motor according to one of the preceding claims,
**characterised in that** the canned motor (1) is an asynchronous motor or an electrically commutated motor.

9. A canned motor according to one of the preceding claims,
**characterised in that** the stator winding (4) is cylindrical or semispherical, more particularly pot-shaped.

10. A canned motor according to one of the preceding claims,
**characterised in that** permanent magnets (8) arranged uniformly around the rotor axis are attached to the side of the rotor (2) adjacent the can (5).

11. A canned motor according to one of the preceding claims,
**characterised in that** the permanent magnets (8) are segment-shaped.

12. A canned motor according to one of the preceding claims,
**characterised in that** the rotor (2) positively or non-positively retains a supporting element (11), the element (11) bearing the permanent magnets (8).

13. A canned motor according to one of the preceding claims,
**characterised in that** the supporting element is a sleeve-shaped plastics member which is slipped on to the rotor (2) and by its outer generated surface positively or non-positively retains a bundle of laminations (12), the permanent magnets (8) being received in or secured in the side of the bundle of laminations (12) remote from the plastics member (11).

14. A canned motor according to one of the preceding claims,
**characterised in that** the can (5) is made from a soft magnet material or plastics.

15. A canned motor according to one of the preceding claims,
**characterised in that** the motor electronics (9) are constructed in the form of a module, more particularly an attachable module.

16. A canned motor according to one of the preceding claims,
**characterised in that** the motor electronics (9) form part of the motor casing.

17. A canned motor according to one of the preceding claims,
**characterised in that** the motor electronics module (9) has a bush and/or a plug, and the can (5) /the stator winding (4) has a plug and/or a bush, the bush and plug engaging in one another during the mounting of the module (9) and forming the electric contact.

## Revendications

1. Moteur à gaine (1) pour pompe, avec une gaine (5) disposée entre le rotor (2) et le stator, qui sépare le côté de guidage du liquide refoulé d'avec le côté d'entraînement électrique, une bobine statorique (4) étant portée par un empilage de tôles statoriques, le stator présentant un corps de base (3) en forme de douille à paroi mince, en particulier feuilleté, sur lequel sont disposées des entretoises (3a) en saillie radiale vers l'extérieur, disposées avec une répartition uniforme autour de la périphérie, s'étendant sur au moins une partie de la longueur axiale du corps de base, qui forment entre elles des rainures (3c) dans lesquelles sont logées les bobines statoriques (4),
caractérisé en ce que le corps de base (3) en forme de douille est adjacent par sa face intérieure cylindrique (18) au moins partiellement à la face extérieure de la gaine (5) et une pièce de fermeture (30) en forme de pot, qui ferme les rainures (3c) en direction radiale, est enfilable sur le corps de base (3) avec ses entretoises (3a), et la pièce de fermeture (30) est adjacente au moins partiellement au fond de la gaine (5) par sa face intérieure (31) de fond de pot.

2. Moteur à gaine selon la revendication 1,
caractérisé en ce que la pièce de fermeture (30) en forme de pot est en un matériau fritté en particulier magnétique doux.

3. Moteur à gaine selon l'une des revendications précédentes,
caractérisé en ce que l'électronique du moteur est sur la pièce de fermeture (30).

4. Moteur à gaine selon l'une des revendications précédentes,
caractérisé en ce que l'électronique (9) du moteur est disposée près du stator ou respectivement est raccordée à celui-ci, en particulier du côté du stator écarté de la roue mobile de pompe, l'empilage de tôles statoriques (3, 3a, 30) servant de corps de refroidissement et de blindage électronique pour l'électronique (9).

5. Moteur à gaine selon l'une des revendications précédentes,
caractérisé en ce que les rainures s'étendent sur la longueur axiale de l'empilage de tôles statoriques (3, 30).

6. Moteur à gaine selon l'une des revendications précédentes,
caractérisé en ce que les bobines électriques et/ou les conducteurs de liaison des bobines statoriques (4) sont adjacentes au fond de la gaine (5).

7. Moteur à gaine selon l'une des revendications précédentes,
caractérisé en ce que la pièce de fermeture (30) en forme de pot est adjacente par sa face intérieure (31) de fond de pot au moins partiellement aux bobines électriques et/ou aux conducteurs de liaison des bobines statoriques (4) adjacents au fond de la gaine (5).

8. Moteur à gaine selon l'une des revendications précédentes,
caractérisé en ce que le moteur à gaine (1) est un moteur asynchrone ou un moteur à commutation électrique.

9. Moteur à gaine selon l'une des revendications précédentes,
caractérisé en ce que la bobine statorique (4) est cylindrique ou semi-sphérique, en particulier en forme de pot.

10. Moteur à gaine selon l'une des revendications précédentes,
caractérisé en ce que des aimants permanents (8), disposés uniformément autour de l'axe du rotor, sont fixés au côté du rotor (2) tourné vers la gaine (5).

11. Moteur à gaine selon l'une des revendications précédentes,
caractérisé en ce que les aimants permanents (8) sont en forme de segments.

12. Moteur à gaine selon l'une des revendications précédentes,
caractérisé en ce que le rotor (2) maintient à coopération de forme ou à frottement, un élément de support (11), l'élément de support (11) portant les aimants permanents (8).

13. Moteur à gaine selon l'une des revendications précédentes,
caractérisé en ce que l'élément de support (11) est une pièce en matière synthétique en forme de douille enfilée sur le rotor (2), qui maintient à coopération de forme ou à frottement, par sa surface d'enveloppe extérieure, un empilage de tôles (12), les aimants permanents (8) étant logés dans, ou respectivement fixés sur, la face de l'empilage de tôles (12) écartée de la pièce en matière synthétique (11).

14. Moteur à gaine selon l'une des revendications précédentes,
caractérisé en ce que la gaine (5) est en un matériau magnétique doux ou en matière synthétique.

15. Moteur à gaine selon l'une des revendications précédentes,
caractérisé en ce que l'électronique (9) du moteur est réalisée sous forme de module, en particulier sous forme de module enfichable.

16. Moteur à gaine selon l'une des revendications précédentes,
caractérisé en ce que l'électronique (9) du moteur forme une partie du carter de moteur.

17. Moteur à gaine selon l'une des revendications précédentes,
caractérisé en ce que le module d'électronique (9) du moteur a une douille et/ou une fiche et que la gaine (5) ou respectivement la bobine statorique (4) a une fiche et/ou une douille, les douilles et les fiches pénétrant les unes dans les autres lors du montage du module (9) et formant le contact électrique.
